# EUROPEAN PATENT APPLICATION

(11) **EP 0 827 784 A1**
(43) Date of publication of application: **11.03.1998**
(21) Application number: 96307768.0
(22) Date of filing: 28.10.1996
(51) Int. Cl.: B05C 17/03, B05C 17/00, B05B 9/047, B65D 75/58

(54) **Paint system**

(30) Priority: 07.09.1996 GB 9618715
(71) Applicant: Black & Decker Inc., Newark Delaware 19711 (US); IMPERIAL CHEMICAL INDUSTRIES PLC, London SW1P 3JF (GB)
(72) Inventor: Bowman, Nicholas John, Orwell, Royston Hertfordshire SG8 5QW (GB); Cane, Michael Roger, Cambridge Cambridgeshire (GB)
(74) Representative: Stagg, Diana Christine

(57) **Abstract**

A paint system comprises a flexible bag (24) for paint, the bag having a sealable opening (40); a machine (10), adapted to receive and squeeze the bag of paint; a tube (60); a connector (50) at one end of the tube for releasable connection to said opening; and means (70) to connect a paint applicator (80) at the other end of said tube, adapted to receive paint from said bag, through said connector and tube, when the bag is squeezed by the machine.

The connector has a bayonet-type connection (180) for engagement with a corresponding arrangement (140) on the opening. The connector and opening have smooth circular-cylindrical engaging sections (153,130) adapted to seal one against the other.

The machine comprises an open container (12) to receive the bag of paint and having a top edge (9) closed by a lid (14), the edge having a recess (35) adapted to receive the connector. The connector comprises a support region (158) adapted to be received in the recess, a connection region (154) for connection to the bag, and a flexible region (156) between said connection and support regions, which flexible region permits adjustment of the position of the connection region relative to the support region during emptying of the bag in use of the system.

A bellows (22) is in the container. A pump (28) is adapted to pressurise the bellows with fluid so as to squeeze the bag.

A paint bag is also disclosed for use in the system.

## Description

This invention relates to a paint system of the type broadly disclosed in GB 2142386. In such a system, paint may be supplied to customers in flexible paint reservoirs, or bags. A machine is supplied which contains a bellows, or other pressurising means, arranged to squeeze the bag of paint and force the paint to exit the bag through a tube to a paint dispensing element, such as a brush or roller.

It is feasible to have the tube integrally connected with the bag, but in this event, a new tube is supplied with each bag of paint and this is expensive and wasteful. Consequently it is desirable to have a separate tube capable of connection to and disconnection from the bag. Then, the tube can be re-used, if it is cleaned between uses.

The present invention is particularly concerned with the interface between the tube and bag, and arrangements around that area of the system, because there are a number of issues which have to be borne in mind. The first consideration is that an effective seal must be reliably and repeatably achievable between the tube and bag. Secondly, it is most desirable if some form of fail-safe arrangement is provided, because it is occasionally possible that a user might inadvertently fail to make a proper connection between tube and bag, so that an unfortunate accident might result if the machine is switched on and paint is permitted to exit the bag but not be directed entirely up the tube.

On the other hand, a manufacturer can only go so far in the design of such a system to prevent reasonably foreseeable accidents, i.e. to put safeguards in place to prevent spillage, and yet provide a cost-effective and conveniently easy to use system. A compromise is often required between these conflicting requirements.

It is an object of the present invention to provide a paint system having, among others, an interface arrangement which meets these objectives, or at least goes some way towards achieving them.

In accordance with a first aspect of this invention there is provided a paint system comprising:-
a) a flexible bag for paint, the bag having a sealable opening;
b) a machine, adapted to receive and squeeze the bag of paint;
c) a tube;
d) a connector at one end of the tube for releasable connection to said opening;
e) means to connect a paint applicator at the other end of said tube, adapted to receive paint from said bag, through said connector and tube, when the bag is squeezed by the machine; wherein
f) said connector has connection means comprising a bayonet-type arrangement for engagement with a corresponding arrangement on the opening; and
g) the connector and opening have smooth circular-cylindrical engaging sections adapted to seal one against the other when said bayonet-type arrangement between the connector and bag are engaged.

Preferably, said opening has first and second connection means; wherein
a) said first connection means (which may be a screw thread) is adapted for engagement by a cap for sealing said bag closed;
b) said second connection means comprises said bayonet-type arrangement for engagement by the connection means on the connector.

Preferably, said opening comprises a base and said neck is a substantially cylindrical annulus extending from said base, said screw thread being formed on the outside of said neck adjacent said base, and said bayonet arrangement being formed on the outside of said neck beyond that end of said screw thread which is remote from said base, said bayonet arrangement having a reduced radius relative to the screw thread.

Preferably, said bayonet arrangement itself comprises a short screw thread and detent means are provided to lock the connector to the opening when said bayonet arrangements on the neck and connector are engaged. Said detent means may comprise a notch in one of the base and the connector, and a corresponding lug on the other of the base and connector. The lug may be on the connector, and there may be two of them spaced around the connector and two correspondingly spaced notches on the base.

Alternatively, and this is preferred the detent means may comprise a ramp on the radius of the bayonet screw thread, towards the end of the screw thread, and over which bayonet dogs on the connector must ride to reach a final position.

Preferably, the length of mutually engaging circular cylindrical sections of the opening and connector is at least as long as the diameter of said mutually engaging sections. One of said circular cylindrical sections may be provided at least in part by an elastomeric O-ring. Preferably, the section of the opening is an internal surface of the neck, and the section of the connector is an external surface thereof. In this case the O-ring is disposed in a groove around the connector, ideally adjacent the open end of the connector.

Visual indication is preferably provided when correct engagement between said connector and bag is achieved.

Preferably, said visual indication comprises a non-circular shaped part of the connector adapted to lie adjacent to a correspondingly shaped part of the bag when said correct engagement is achieved. The non-circular shaped part may be formed from a collar depending from said connector and surrounding the base of the opening when said correct engagement is achieved.

Preferably, said bag comprises a plastics envelope and said opening comprises a discrete opening element welded between parts of the envelope. The opening element may have a weld part on which the base is formed, the weld part being elongate across the opening in order to lead-in and lead-out mating parts of the envelope. The collar ideally corresponds in shape to the weld part and thereby provides said visual indication.

In accordance with a second aspect of this invention there is provided a paint system comprising:-
a) a flexible bag for paint, the bag having a sealable opening;
b) a machine adapted to receive and squeeze the bag of paint;
c) a tube;
d) a connector at one end of the tube for releasable connection to said opening;
e) means to connect a paint applicator at the other end of said tube, adapted to receive paint from said bag, through said connector and tube, when the bag is squeezed by the machine;
f) the machine comprising an open container to receive the bag of paint and having a top edge;
g) a lid, to close the container around said edge; and
h) a recess in the edge adapted to receive captively the connector; wherein
i) the connector comprises a support region adapted to be received in said recess, a connection region for connection to said bag, and a flexible region between said connection and support regions, which flexible region permits adjustment of the position of the connection region relative to the support region during emptying of the bag in use of the system.

Preferably, the tube is itself flexible and passes through the support region of the connector to the connection region thereof. The connector between the support and connection regions thereof protects the tube against compression when the bag is squeezed, which otherwise would serve to block the exit of the paint through the tube. The connector may have a further region beyond the support region with respect to the connection region to support flexibly the tube exiting the support region.

Preferably, the regions of the connector are a single integrated moulded plastics component, the flexible region comprising a helix joining said support and connection regions. The connector may also comprise a connection element which is discrete with respect to said regions of the connector, and is captivated in said connection region. In this event, the connection element may have one end connected to the tube, its other end forming a circular-cylindrical section of the connector for sealing engagement with a corresponding section of the opening of the bag.

Preferably, said one end of the connection element has a sleeve over which said tube is slid for attachment thereof, the connection region having a surface surrounding said sleeve when the connection element is in place inside the connection region to captivate the tube therebetween. A circumferential rib may be disposed on the sleeve, against which sleeve the tube is pressed by said surrounding surface of the connection region to secure the tube in place in the connector.

Preferably, said support region and recess are shaped so that said support region only fits said recess to permit closure of the lid in no more than two orientations of the support region in the recess. Said support region may have a depending pillar, and said recess an eye into which said pillar closely fits, and wherein the connector prevents closure of the lid if the support region is in the recess without the pillar being received in the eye.

Preferably, there is at least some rotational rigidity between the support and connection region of the connector and said orientation corresponds with the orientation between the connector and bag when the connector is correctly connected to the bag.

Preferably, the paint system is in accordance with both the first and second aspects of the present invention, in which event said rotational rigidity also serves to prevent inadvertent unscrewing of the bayonet connection between the connector and bag. In this event, and where the flexible region comprises a helix, the helix lies close against the tube and the direction of twist of the helix is such that undoing of the bayonet connection between the connector and bag is in the tightening direction of the helix.

In accordance with a third aspect of this invention there is provided a paint system comprising:-
a) a flexible bag for paint, the bag having a sealable opening;
b) a machine adapted to receive and squeeze the bag of paint;
c) a tube;
d) a connector at one end of the tube for releasable connection to said opening, the connector having a generally longitudinal axis;
e) means to connect a paint applicator at the other end of said tube, adapted to receive paint from said bag, through said connector and tube, when the bag is squeezed by the machine;
f) the machine comprising an open container to receive the bag of paint and having a top edge;
g) a lid to close the container around said edge; wherein
h) the edge is provided with a recess adapted to receive the connector;
i) the connection between said connector and opening has no more than two specific rotational positions of the connector about its longitudinal axis with respect to the opening; and
j) the connector is receivable in the recess with the lid closed over the recess in not more than two orientations of the connector about said longitudinal axis with respect to the recess.

In accordance with a fourth aspect of this invention there is provided a paint system comprising:-
a) a flexible bag for paint, the bag having a sealable opening;
b) a machine adapted to receive and squeeze the bag of paint;
c) a tube for releasable connection to said opening;
d) means to connect a paint applicator at the other end of said tube, which applicator is adapted to receive paint from said bag, through said connector and tube, when the bag is squeezed by the machine; wherein the machine comprises:-
e) an open container to receive the bag of paint;
f) a lid to close the container;
g) a latch to secure the lid closed when the latch is active;
h) a bellows in the container;
i) a pump adapted to pressurise the bellows with fluid so as to squeeze the bag;
j) a connectible power supply to power the pump;
k) a user operable switch to connect power to the pump; wherein
l) lid means prevent the latch remaining active unless the lid is closed; and
m) latch means prevent connection of power to the pump unless the latch is active.

Preferably, the latch is part of a handle pivoted to the container and pivotable between open and closed positions thereof, the latch being active in the closed position of the handle.

Preferably, said lid is pivoted to the container and said lid means holds the handle in its closed position when the lid is in its closed position.

Preferably, said lid means comprises a catch on the lid which is caught by the handle on closing of the handle when the lid is already closed.

Preferably, said latch comprises at least one substantially C-shaped clasp on the handle, ends of the clasp being adapted to engage ledges on the lid and container when the handle is closed.

A part of the bellows may be connected to the lid, so that, should a user close the handle when the lid is open, closure of the handle is, at least to some extent, impeded by the bellows. More importantly, however, since the catch which retains the handle in its closed position is on the lid, then if the lid is not closed when the handle is brought into its operative, closed position, there is nothing to retain it in this position. Furthermore, the latch does not operate either, since that is between the container and lid. Consequently, the handle falls easily to its open position in which the latch means deactivates the machine; and even if it does not, expansion of the bellows serves to pull the lid towards its closed position (as described more fully below) which would also serve to open the handle and deactivate the machine.

Preferably, the switch comprises a switch body and a switch actuator, the body being movable relative to the container between first and second positions, in the first position of which, said switch actuator is actuatable by the user and in the second position of which said switch actuator is not actuatable by the user, the latch means being operable to move the body and to maintain it in said first position when the latch is active.

Preferably, the switch further comprises a user operable button adapted either to actuate the switch actuator when said arm is in said first position and when said latch is active, or serving to move the arm to said second position when the latch is not active.

Preferably, the latch means comprises part of the handle which, when the handle is closed moves the switch body to its first position.

In accordance with a fifth aspect of this invention there is provided a paint bag, which bag is flexible and comprises:-
a) a sealable opening; wherein
b) said opening has a neck provided with first and second connection means; wherein
c) said first connection means (for example, a screw thread) is adapted for engagement by a cap for sealing said bag closed; and
d) said second connection means comprises a bayonet-type arrangement for engagement by a corresponding arrangement on a connector adapted for connection to the paint bag for delivery of paint therefrom;
e) the opening having a smooth circular-cylindrical section adapted to seal a corresponding section of the connector when said bayonet-type arrangement between the connector and bag are engaged.

Preferably, said bag comprises a plastics envelope and said opening comprises a discrete opening element welded between parts of the envelope. The opening element may have a weld part on which the base is formed, the weld part being elongate across the opening in order to lead-in and lead-out mating parts of the envelope. Preferably, the collar corresponds in shape to the weld part and thereby provides said visual indication.

Finally, the invention also provides a paint applicator for connection to a paint system as described above.

A paint system that incorporates the concepts of the present invention has numerous advantages. By arranging for the various components to be so shaped, dimensioned and adapted, it is difficult for the user to assemble the system so that it functions without it being plainly obvious if the connector is not correctly connected to the paint bag. This is not to say that it would be impossible to operate the system incorrectly, for example, there is no provision by the arrangements described herein that prevent operation of the system without the tube connected to the system at all. In such a situation it would be entirely possible for the user to operate the system, and make an horrendous mess in the process! However, to provide arrangements which prevent such "accidents" involves additional complexity and expense and is unnecessary for normal operation.

If the lid of the system cannot be closed without the connector being properly in place (unless it is entirely absent); if there is a visual indication of correct connection between bag and connector; and, if the orientation of the connection between bag and connector is such that only in that case can the connector easily be inserted in the recess: then it will be obvious to the user if all is not correct when he/she attempts to close the lid and use the machine. This advantage is most conveniently realised with the bayonet-type connection between the connector and bag, which has a specific rotational position when engaged. The second screw thread connection means on the bag is simply for connection of the sealing cap for when the paint is first supplied, but also for storage after use if not all the paint in the bag is used.

The use of mutually engaging circular-cylindrical surfaces between the connector and bag to seal the connection between them has the advantage that there is no precise axial alignment required between the two, and facilitates the use of the bayonet connection. Since, as will be apparent from the following description of the system, there is relative movement between the connection region of the connector and the support region, a relatively long length of overlap between the mutually engaging surfaces ensures that such movement does not result in any leakage. Providing the O-ring near the open end of the connector means that the seal line is deep within the opening of the bag, rather than near its lip.

Closure of the handle serves to enable actuation of the machine, but unless the lid is closed, the handle does not stay closed, not only because there is nothing to keep it closed, but also because inflation of the bellows tends to pull the lid towards its closed position which would press against the handle to open it. Thus while none of these measures prevent deliberate misuse of the machine, they are such as to render **inadvertent** incorrect use extremely unlikely.

Although the word "paint" is used exclusively herein, it should be understood to include any liquid, and, indeed, while the invention is described exclusively in relation to the application of paint, which in this context includes other surface coating compositions such as varnishes, stains and lacquers, the concepts embodied in the present invention may be employed in the dispensing of liquids completely unrelated to surface coating compositions.

The invention is further described hereinafter with reference to the accompanying drawings, in which:-
Figure 1 is a perspective view of a paint system machine according to the present invention;
Figure 2 is a view similar to Figure 1, but with the handle of the machine in its open position;
Figure 3 is a top plan exploded view of the paint machine, with its lid open;
Figure 4a is a side view similar to Figure 3;
Figure 4b is a detailed view of latch means operating in the circled area of Figure 4a;
Figure 5a is a side section on the line V-V in Figure 3, with the addition of a deflated bellows and pump unit shown;
Figure 5b being a similar view from the opposite side but with the lid closed;
Figure 6 is a back view of a full paint bag in accordance with the present invention including schematic representations of a connector, tube and paint applicator;
Figure 7 is a front view of the bellows in Figure 5;
Figure 8 is a perspective view of the pump unit of Figure 5;
Figure 9 is a side view of an empty paint bag in accordance with the present invention;
Figures 10 a, b, c and d are transparent side views/side sections of a paint bag opening element, cap, and connector, Figure 10a showing the opening with cap fitted, 10b showingthe opening with cap removed and connector adjacent, 10c showing the opening with connector connected, and 10d being a section on the line D-D in Figure 10a;
Figure 11 is an end view of the connector of Figure 10;
Figure 12a is a side section of a paint bag cap;
Figure 12b is a section on the line B-B in Figure 10b;
Figures 13a and b are sections on the lines A-A and B-B in Figures 10b and 10c respectively;
Figures 14 a, b and c are top views of the paint machine in its open condition in three stages of depletion of a paint bag therein;
Figure 15 is a side transparency of a paint applicator handle; and
Figures 16 a and b are two sectional views of a paint applicator on the lines X-X and Y-Y in Figures 16 b and a respectively.

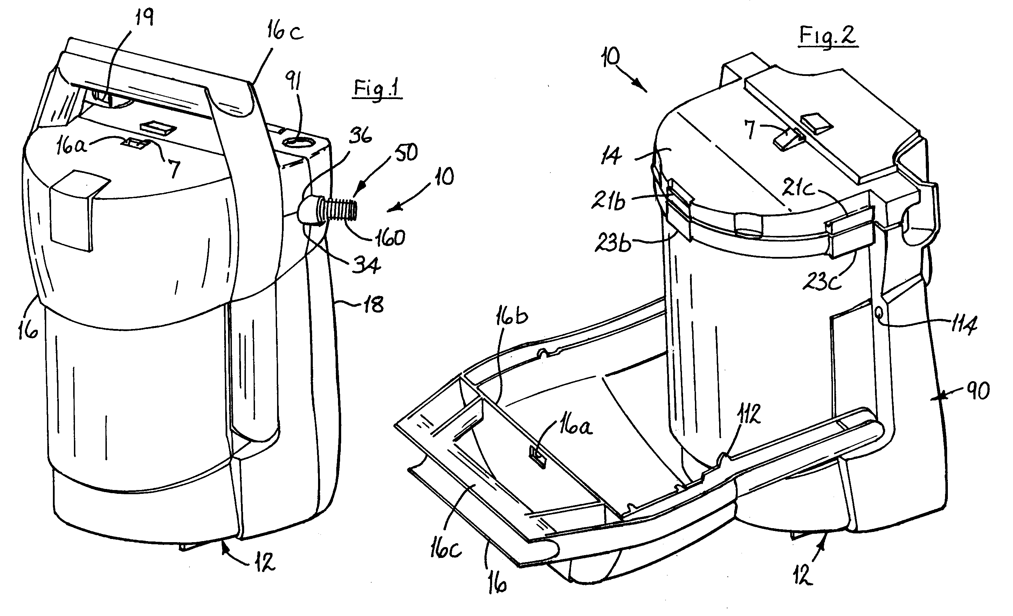

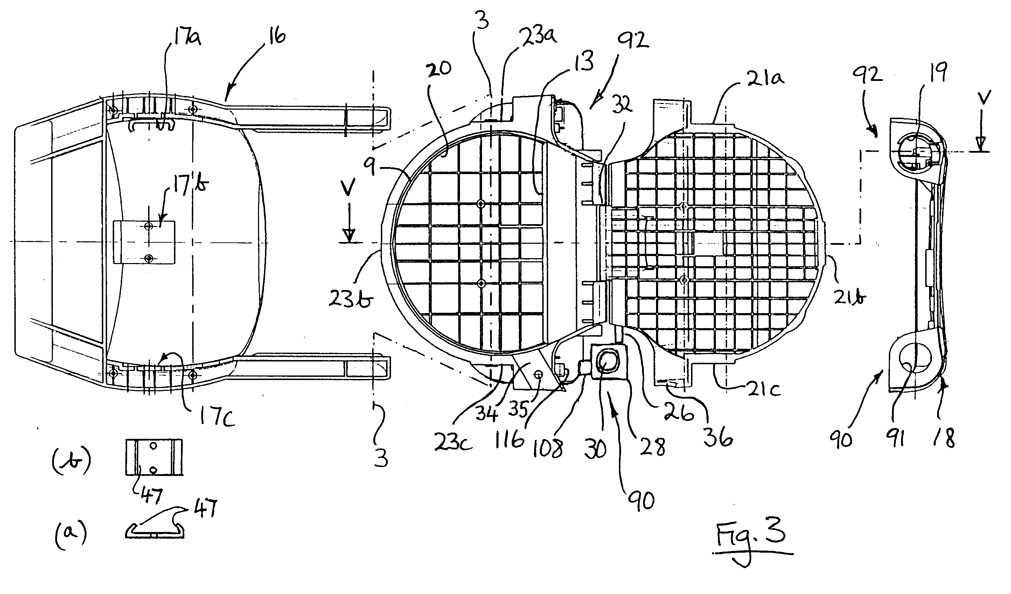

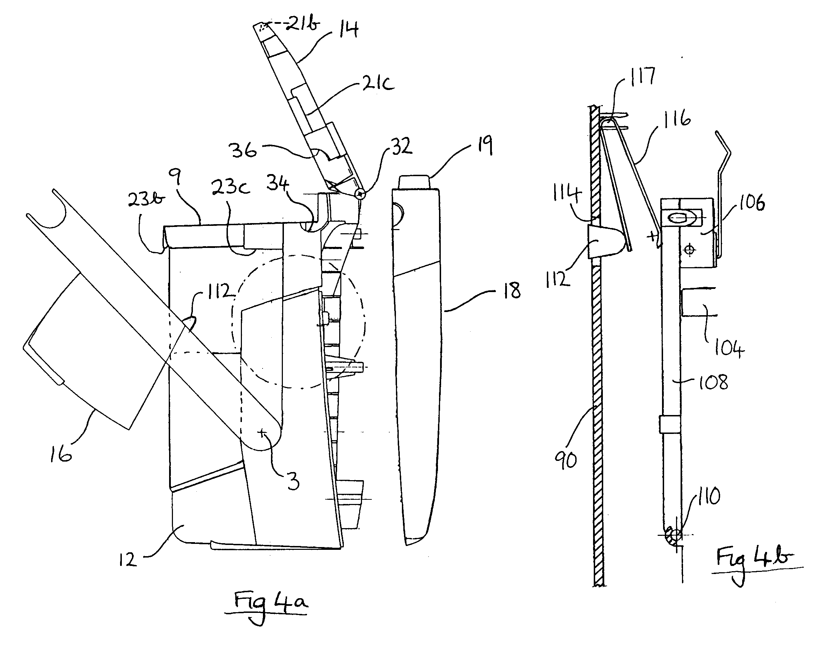

With reference to Figures 1 and 2, a paint system according to the present invention comprises a paint machine 10 having a main container body 12, a lid 14 and a handle arrangement 16. A back cover 18 is shown in Figure 1, but is removed from Figure 2.

With reference to Figures 3 to 6, the container 12, lid 14, handle 16 and back cover 18 are all moulded plastics components. Container 12 defines a large open internal volume 20 having a top edge 9 and being adapted to receive a bellows 22 and a paint bag 24. The bellows is pressurised with air through a tube 26 entering the bottom of the bellows by a pump unit 28 disposed in a space between the back of the container 12 and back cover 18.

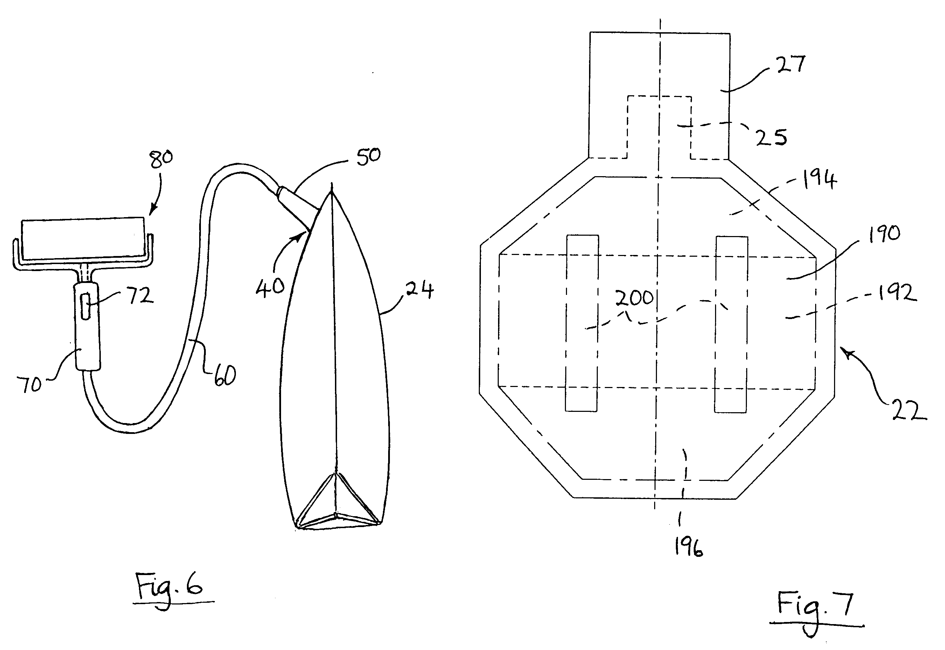

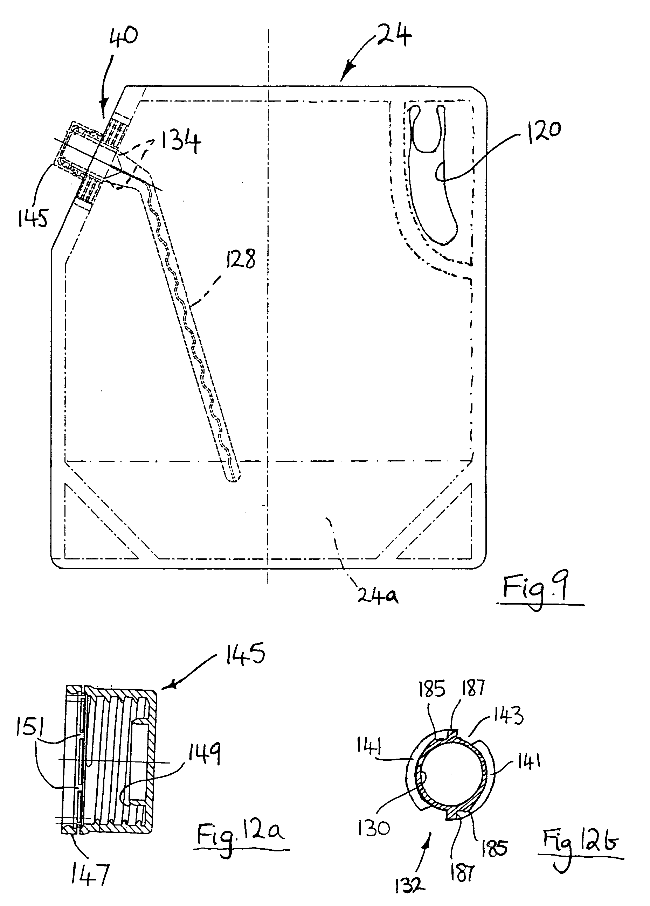

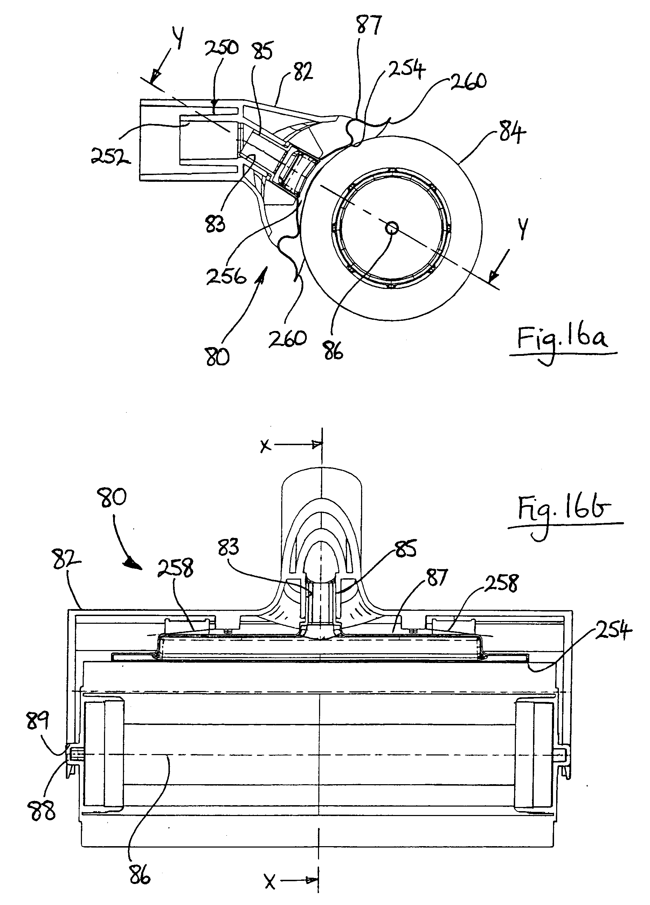

The pump unit 28 is operated by a button 30 and is powered by a battery (not shown). The paint bag 24, when filled with paint, is placed in the container 12 where it nestles close to the bellows 22, and fits snugly inside the volume 20. The lid 14 is pivoted to the container about axis 32 to close the container 12. The paint bag has an opening 40 (see Figure 9) to which a connector 50 can be fitted. The connector 50 is at one end of a flexible tube 60 (Figures 14a to c) leading at its other end to a handle 70 (Figure 15) to which a paint applicator such as roller arrangement 80 (Figures 16a and b) may be attached. This is also schematically shown in Figure 6. The container top edge and lid have respective recesses 34,36 adapted to receive the connector 50 when correctly oriented as explained further below.

Handle 16 is pivoted to the container about axis 3. When the lid is closed, handle 16 can be pivoted to the position shown in Figure 1 where it prevents the lid from opening, by means more explicitly described below. The lid includes a catch 7, pivoted to the lid about axis 5 and biased by spring 11 toward engagement with an eye 16a in the top of handle arrangement 16. Catch 7, when engaged with eye 16a (which, of course, can only happen when the lid is first closed and the handle closed second) keeps the handle in its closed position.

When the button 30 is depressed, the pump unit 28 pressurises bellows 22 which expand and compress the paint bag 24. Paint in the bag is then squeezed out through opening 40 into tube 60, and thence to handle 70 and applicator 80. A control knob 72 on handle 70 is used to control flow of paint to roller arrangement 80 so that sufficient is supplied to maintain the requisite wetness of the roller as it is rolled over a wall or other surface to which paint is to be applied.

It is desirable that the paint rolls well and does not spatter, and this is primarily a function of the paint. The best compositions in this regard have a high viscosity and various other characteristics, when compared, for example, with water. Indeed, a co-pending application filed by the present applicants contemporaneously with the present application under the title "Process for the roller application of an aqueous thixotropic paint at ambient temperatures" describes a formulation particularly adapted for the system of the present invention. To gain sufficient flow of such paint to the roller, in order to achieve a reasonable rate of surface coverage, either the diameter of the tube should be large, or the pressure developed by the machine should be large.

The former requirement has the disadvantage that, with a large diameter tube, a large volume of paint remains unusable in the tube when the paint bag is empty and pressure in the system drops. The latter requirement is therefore preferred, and this calls for strength in the design of the machine 10. Thus, container 12 has substantial latticing on its flat surfaces, that is to say along its back surface 13 and bottom 15, in order to provide reinforcement of those surfaces. The lid 12 is likewise latticed. Curved surfaces of the container do not require such reinforcement. With this arrangement pressures of the order of 1.5 bar above atmospheric or more can be accommodated, although only about 1 bar above atmospheric (i.e. about 2 bar absolute) is found to be necessary to provide the requisite flow rate.

In order to withstand such pressures, the lid 14 is retained in place by the handle 16 in which metal clips, or clasps 17, [see insets to Figure 3 which show the clips in side view (a) and front view (b) and also Figure 5b] are connected. The clips are fitted in the handle at positions 17a, b and c, and edges 47 thereof are adapted to form a latch and to capture lips, or ledges, 21a, b and c and 23a, b and c on the lid and container respectively. Thus the handle itself does not itself require the strength to withstand the opening forces imposed on the lid as the bellows inflate and expand; rather it is the latches 17 which accommodate such forces and keep the lid closed. Indeed, lifting of the lid by the pressure developed inside the container as the bellows is inflated engages the clips (at 17b, in particular), with the dovetails formed by lips 21b and 23b, so that the handle cannot be withdrawn from the locked position until the pressure in the container has reduced sufficiently to drop the lid back against the top of the container, and so that the latch constituted by the clip 17b (at least) can be disengaged from the lips 21b,23b.

The container 12 and back cover 18 define between them two wings 90,92, in one of which (90) is disposed the pump unit 28, its button 30 protruding through aperture 91 in back cover 18, and in the other (92) is disposed a removable and rechargeable battery (not shown), which powers the pump unit, and which is accessible through aperture 19 in back cover 18.

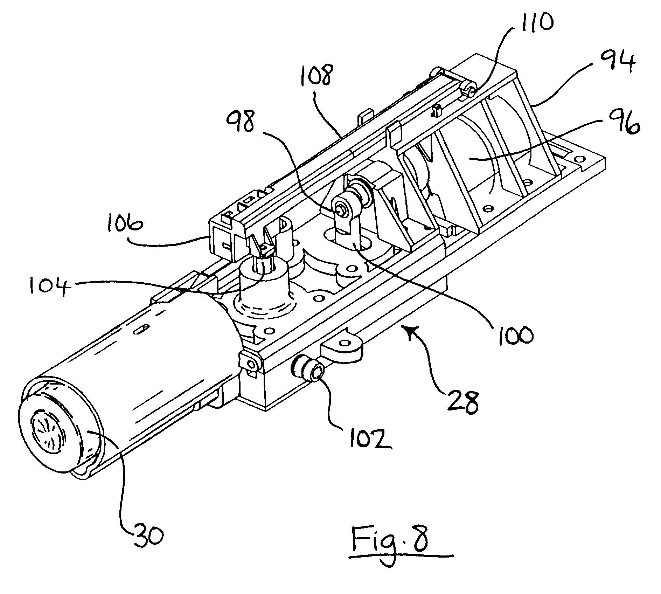

Figure 8 illustrates the pump unit 28, which comprises a frame 94 mounting a small electric motor 96. The motor drives an eccentric link 98 so that a piston 100 connected to a diaphragm (not shown) is caused to rotate. Air is drawn into a diaphragm chamber on one stroke of the piston and pressured into a pressure chamber on the other stroke. Air exits the pressure chamber through outlet 102 to which tube 26 is connected. The pressure chamber is controlled by an actuator 104 which lifts when the pressure reaches a predetermined value. The pressure chamber is also controlled by a separate yield/dump valve. None of these components are shown or described in detail because they are not directly relevant to the present invention.

Button 30, when depressed, actuates microswitch 106 mounted on one end of a swing arm 108, which is pivoted about hinge 110 at its other end to the frame 94. However, even when the button is depressed, microswitch 106 is not actuated unless swing arm 108 is pivoted downwardly in Figure 8. This occurs when handle 16 is moved to its closed position and pip 112 enters window 114 on the front side of wing 90 and presses against a leaf spring element 116 (see Figure 4b) which hangs, pivotably about axis 117, from the back of the front side of wing 90. Spring element 116 in turn presses swing arm 108, with a small spring force, against a yield actuator 104. Thus pip 112, and element 116, between them constitute latch means to prevent operation of the motor until the latch, constituted by the handle 16 and its clasps 17, is active, i.e. engaged to latch the lid 14 closed. Thus the latch and the latch means are separate entities, but are connected so as to operate simultaneously.

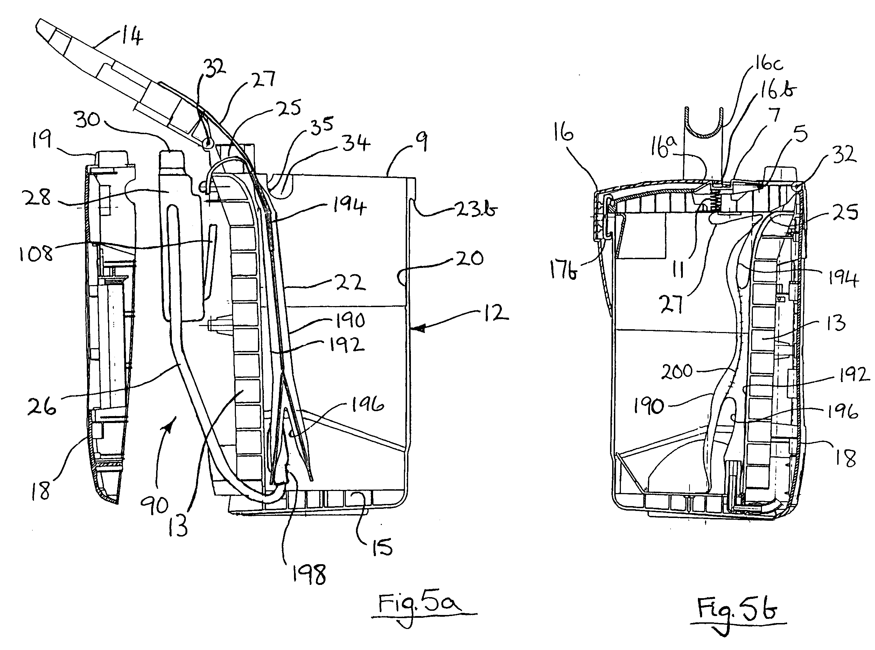

Lid 14 is in fact arranged to be capable of opening only as far as shown in Figure 5 (and not as far as shown, for the sake of clarity, in Figure 3). Moreover, for reasons explained further below, the bellows 22 has two flaps at its top, one of which 25 is connected to the top of back 13 of the container, while the other larger flap 27 is connected to the middle of the underside of lid 14. When the lid is open in the position shown in Figure 5, closing the handle 16 brings its front edge 16b against the flap 27 of the bellows. Should the handle rest in this position, it may be possible to start the pump because the latch means 116 is active. However, there is nothing to retain the handle in this position (since the catch 7 on the lid is not operational), and so, because of the handle's orientation and weight distribution it is likely to fall open of its own accord and disengage the latch means and disable the pump. Even if it does not, however, expansion of the bellows causes the flap to pull the lid forward until it contacts grip part 16c of the handle and pushes the handle to its open position. Thus the flap connection 27 to the lid serves as lid means to prevent the handle from remaining closed unless the lid is itself closed.

So this arrangement ensures that, before the motor can be activated or at least remain activated, the lid and handle must be closed. If the air pressure generated by the pump diaphragm rises beyond the working pressure of 1 bar above atmospheric, actuation rod 104 is lifted by the pressure chamber below it and pivots swing arm 108 against the pressure of spring element 116. This serves to disengage microswitch 106 from the button 30 so that the motor 96 is switched off until such time as the pressure drops below the working pressure. Finally in this regard, the yield/dump valve is activated by operation of the button 30 which, when depressed, presses a valve member (not shown) against an opening of the pressure chamber. Should the pressure in the pressure chamber rise above a limit value of, for example, 1.5 bar above atmospheric (perhaps because the switch 106 does not turn off the motor despite lifting of the swing arm) then the yield valve lifts to relieve that pressure. When the button is released, however, the yield/dump valve is lifted off its seat and air pressure in the pump is entirely released to atmosphere.

Turning now to Figures 9 to 13, the paint bag 24 comprises a plastics envelope welded around its periphery. A gusset 24a is folded under and forms a base of the bag 24. A carrying handle 120 is formed in one corner, and in the other is the opening 40. The opening 40 comprises a discrete opening element 41 captured by the bag envelope and welded to it. Element 41 comprises a weld part, or base, 122 having tapering lead-in, lead-out regions 124,126 enabling reliable welding to the bag envelope. Behind the weld part is connected a dip element 128 which serves to keep the walls of the envelope apart and ensure a passage for paint in the bag from the bottom of the bag to the opening. A passage 130 is formed through the weld part and into a neck 132 of the element 41. The dip element 128 is essentially cruciform in section and connects with the weld part at two points 134 providing access to the bag interior from the passage 130.

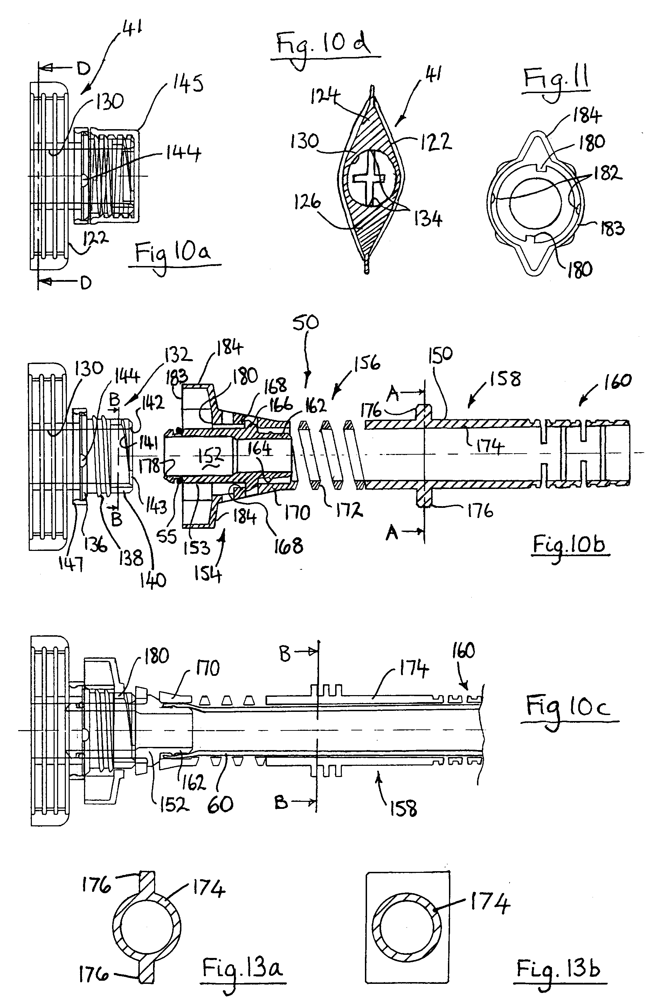

Neck 132 has, from its connection to the weld part 122, a flange 136, a screw threaded region 138, a bayonet region 140, and a mouth 142 for the passage 130. Flange 136 has two equi-spaced detents, or notches, 144. The flange captures a security ring 147 on a sealing cap 145 (Figure 12). Cap 145 is internally screw threaded for engagement with screw thread 138 on the neck 132 of the opening. A seal flange 149 is adapted to seal against, and close, mouth 142. When cap 145 is first screwed onto neck 132, cap security ring 147 snaps over flange 136. When the cap is first removed, tags 151 (connecting the ring 147 to the rest of the cap) break and leave the ring 147 in place behind flange 136 (see Figure 10b). Bayonet 140 of the neck 132 comprises merely a one third to one half turn screw thread 141, one on either side of the neck.

Connector 50 comprises two discrete elements, a main connector body 150 and a connection element 152. Connector body 150 has a connection region 154, a flexible region 156, a support region 158 and a protection region 160. The tube 60 passes through the connector body and is press fitted over one end 162 of connection element 152. A circumferential rib 164 aids sealing and also ensures a tight fit when the connector body, is slid over the tube and snapped into engagement with the element 152, a ring flange 166 on the element snapping under barbs 168 in the body 150. A sleeve 170 of the body closely surrounds the end 162 of the element 152 and presses the tube into engagement with the rib 164 securing the connection of the tube to the element 152.

Behind the connection region of the connector 150 is the flexible region 156. The reason for this flexible region is explained further below, but it comprises an helical formation 172 which gives the region flexibility but at the same time a certain amount of rotational rigidity at least in one, tightening direction of rotation of the helix, about the long axis of the connector.

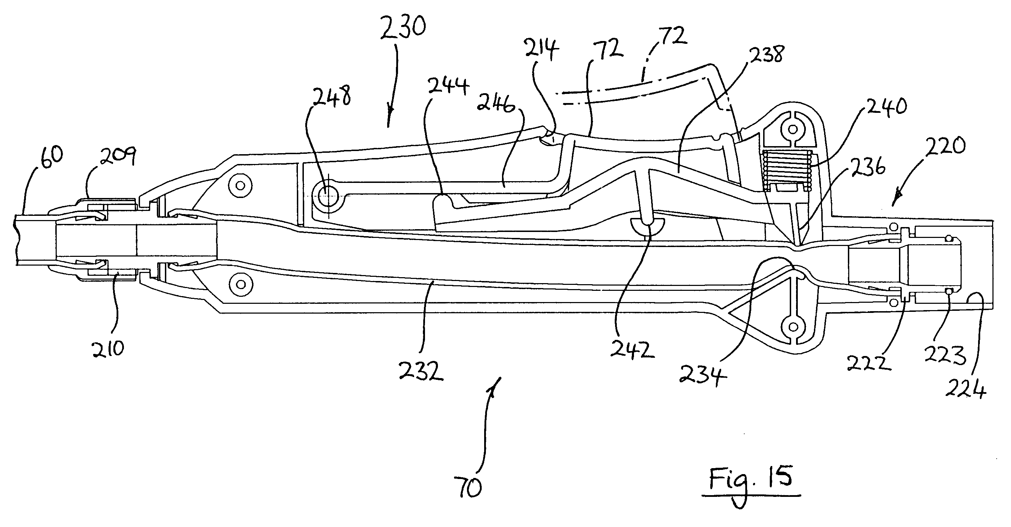

Beyond the flexible region is the support region 158 which, in Figures 10b and 10c is shown in two alternative forms, cross sections of each form being shown in Figures 13a and 13b respectively. The Figure 10b embodiment is preferred and, apart from comprising a rigid sleeve 174 which both embodiments employ, it has a two opposed depending pillars 176, one of which is adapted to be received in an eye 35 formed in the base of recess 34 of the container 12. In Figures 10c and 13b, the support region is given a rectangular section adapted to be received in the recess 34 which would be correspondingly shaped and so as to ensure only two possible orientations of the connector in the recess.

Finally the protection region 160 extends from the support region 174 and may, like the flexible region comprise a helix, or as shown may comprise a lattice type arrangement, in either case merely to ensure that the tube exiting the support region cannot kink through a small angle but is supported over a larger radius of bend by the protection region 160. The flexible region 156 may also be arranged as a lattice formation but helix is preferred for both since a helix provides greater flexibility.

The passage 130, over a distance at least as long as its diameter, has a smooth circular cross-section from its mouth 142. Likewise, connection element 152 has a smooth external circular cross-section 153 over a similar length from its own mouth 178. Near its mouth, the connection element 152 has a circumferential groove in which is disposed an elastomeric O-ring 155, adapted to provide a seal against passage 130 when the connector 150 is engaged with bag opening 40.

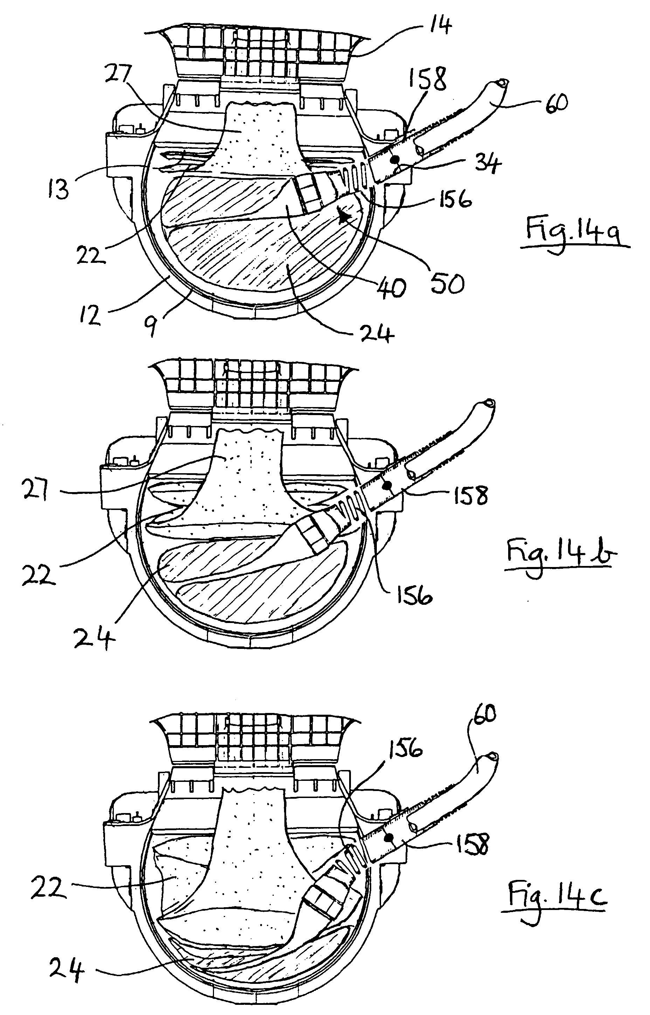

About the connection element 152, the connector body 150 in its connection region 154 has a pair of bayonet dogs 180 (see also Figure 11). These are adapted to be engaged in entries 143 of bayonet screw thread 141 of neck 132. When dogs 180 are engaged with thread 141 and the connector is turned through about 90 degrees, two lugs 182 on the inside of a collar 183 of the connection region 154 engage flange 136 on neck 132 of the bag opening 40. When the connector is turned fully, the lugs snap into detent notches 144 in the flange 136. Visual indication that correct connection has been made is provided by wings 184 of the collar 183 which wings 184 correspond in shape, and alignment when the connector 50 is correctly connected, with the tapering lead-in, lead-out regions 124,126 of weld part 122 of the opening element 41. Alternatively, and this is preferred, the lugs 182 can be omitted, and the detent mechanism that this arrangement provides is instead provided by ridges or cams 185 (see Figure 12b) on the base of the threads 141, in front of the end stops 187, and over which the dogs 180 snap before coming to rest against the stops 187.

Turning now to Figure 14, this illustrates the process of bag 24 emptying of paint during use as the bellows 22 expand. The first thing that needs to be said is that the lid 14 is shown open and, for the reasons explained above, this cannot, in fact, be the case while the machine 10 operates. However, the lid is shown open for the sake of clarity. Indeed, the flap 27 of the bellows appears to grow in Figures 14a, b and c, but of course this is not, in reality, the case, although the flap does move during bellows inflation under its connection to the lid when the lid is closed.

When the bag 24 is full and received within volume 20 of the container 12, it occupies most of that volume conforming itself to the shape of the container. The bellows 22 is completely deflated and lies flat against back wall 13 of the container 12. When the connector 50 is correctly connected to bag opening 40, not only is this visually apparent by close alignment of wings 184 and weld element 122, but also support region 158 fits quickly and easily into recess 34 of the container with pillar 176 entering eye 35 therein. There will be slight bending necessary of the flexible region 156.

When the machine is switched on, the bellows 22 begins to inflate and squeeze the bag 24 in the container 12 so that paint therein exits through bag opening 40, through connector 50 into tube 60, and thence into handle 70 and paint applicator 80 (described further below) for application to a surface such as a wall.

As the bag is emptying as shown in Figures 14b and 14c, the centre line of the bag moves away from back wall 13, so that flexible region 156 of the connector 50 flexes first to an in-line position as shown in Figure 14b and finally to a bent position as shown in Figure 14c when the bag is substantially empty, and somewhat opposite to that when the full bag 24 is first inserted, as shown in Figure 14a.

While the connector 50 is shown as flexible, nevertheless it must resist pushing forces imposed on it by the bellows 22 expanding inside the container 12, otherwise the tube 60 would itself be crushed and the exit for the paint from the bag 24 would be closed.

From the foregoing description, it will now be apparent why it is required that the length of the overlapping circular section parts 130, 153 of the opening and connector respectively is at least as great as the diameter of such parts. This ensures that flexing which takes place in the connector as described above does not result in leakage around the seal. Moreover, the O-ring 155 is placed near the mouth 178 of the connection element 152 so that the seal line is deep within the throat of passage 130 so that when the parts are disconnected, drips are less likely to occur, and cleaning of the connector after use is easier. The latter arises because paint does not go around the outside of surface 153 very far before it meets the seal line formed by the O-ring 155. It should however be mentioned that surface 153 quite clearly does not have to be circular cylindrical to perform adequately; it could be hexagonal, for example, in section, as long as there was sufficient resilience in the O-ring to achieve a complete seal.

Turning back to Figure 7, the bellows 22 is a double envelope comprising front and back sheets 190,192 of elastomeric material, preferably coated in woven cotton to aid slippage against the plastics material of the bag 24, with upper and lower gussets 194,196. Between lower gusset 196 and back sheet 192, an opening 198 is formed for connection of air tube 26. Flap 27 is an extension of front sheet 190, while flap 25 is an extension of back sheet 192 (or the gusset 194).

The gussets 194,196 are connected internally of the bellows by elastic elements 200. These serve to assist deflation of the bellows when air pressure is released when button 30 is disengaged both switching off motor 96 and opening the dump valve provided in the pressure chamber of the pump unit 28. The elastic elements pull the bellows towards its folded, collapsed condition. Moreover, opening of the lid 14 further assists deflation because flap 27 is bent back, as can be seen in Figure 5, and, since the bottom of the bellows is connected, by means not shown, to the bottom of the back wall 13 around the opening 198, the bellows is further urged into its collapsed condition. (The corollary of this effect is as mentioned above that, if the bellows inflate with the lid open, the flap 27 pulls the lid forward so that it contacts grip element 16c of the handle and pivots the handle from the container 12 so disengaging its pip 112 from the element 116 and thereby disabling pump 28).

Turning to Figures 15 and 16, the tube 60 at its end remote from the connector 50 is connected by a screwed adaptor 209 to an input element 210 of handle 70. At its other end, handle 70 has an output 220 having a sleeve element 222 with a circumferential groove to receive an elastomeric O-ring 223. Output 220 has a tapering mouth 224 to receive correspondingly tapering input 250 to applicator 80. The O-ring is adapted to seal against circular cylindrical surface 252 of input 250.

Between its input and output, handle 70 comprises a body 230 including a resiliently elastic tube element 232. Tube element 232 passes over an anvil 234 formed in the body. Above the anvil and tube element is the head 236 of a squeeze lever 238, which head is pressed against anvil 234, squeezing and sealing the tube element 232 therebetween, by a spring 240, mounted in the body 230. Squeeze lever 238 is pivoted in the body about axis 242, and its other end 244 is actuated by switch lever 246, also pivoted in the body about axis 248. Switch lever 246 has knob 72 which extends through an opening 214 in the body 230, and which knob is actuable by the user. The handle is therefore a deadman's handle, the spring 240 serving to close flow of paint in the tube element 232 and through the handle 70 until the knob 72 is pressed by the user. Pressing the knob 72 pivots the switch lever, clockwise in Figure 15, about axis 248, which in turn pivots squeeze lever 238 anti-clockwise about axis 242. Such pivoting is against the restoring force of spring 240, but opens tube element 232 to permit flow of paint while the knob is pressed.

The lever arrangement is such that only a small movement of head 236 results from a large movement of the knob 72. This is desirable on two counts. Firstly the spring 240 needs to be quite strong to ensure adequate sealing under the working pressure when the knob 72 is released, so the extra leverage provided by the arrangement minimises user fatigue. Secondly, although in practice it is found that a handle which is a mere on/off switch to paint flow is more than adequate to satisfy the requirement of a user to be able to keep the applicator sufficiently loaded with paint (the flow merely being turned on and off on a periodic basis as required), the small movement of the head 236 for a large movement of the knob 72 means that an intermediate position of the knob can be found to achieve a flow rate somewhere between nothing and maximum which satisfies the ongoing paint loading requirement as the system is used.

Thus it is the handle 70 which controls paint flow, and therefore indirectly controls operation of the motor 96 of the pump unit 28 in the machine 10. This is because, when the button 30 is activated and the motor 96 starts, the bellows inflates commencing pressurisation of the paint bag. Paint flows while the knob 72 is pressed. When the knob is released, paint pressure rises. This is transmitted back into the bellows whose air pressure rises correspondingly until it reaches the limit determined by the actuator 104 which, when that limit is reached, switches off the motor 96.

Finally referring to Figure 16, applicator 80 here comprises a roller arrangement. Any currently available roller arrangement could be employed, and so also could various brush arrangements which exist. However, the present roller arrangement 80 has several advantages. It comprises a body 82 mounting a roller 84 which is journalled for free rotation about its long axis 86 in the body 82. The roller 84 has pips 88 at its ends which rotate in eyes 89 in body 82.

A petal 87 has a central sleeve 85 which is a close sliding fit in a bore 83 formed in the body 82 and communicating with input 252. Around the sleeve 85 the petal is substantially rectangular having a rectangular lip 254 (having curved short ends to correspond with the circumference of the roller 84) adapted to lie against the roller surface. The lip 254, the petal inside the lip, and the surface of the roller bounded by the lip, between them define a paint plenum 256 into which paint is supplied from handle 70 when it is connected to applicator 80.

No absolute seal is required between facing surfaces 83,85, because paint can be permitted to find its way around the outside of the petal without causing any problem. If it were a substantial amount, it would in any event end up on the roller, but it will not be such an amount because here the paint pressure is substantially atmospheric. If no leak is to be permitted, and this is preferred, then a bellows seal between the petal and body can be provided.

The petal 87 is biased towards the roller by two leaf springs 258 disposed in the body 82. The facing surfaces 83,85 permit the petal to slide in and out slightly to maintain contact of the lip 254 with the roller as it changes diameter with wear or degree of paint loading. The petal has two waves 260 outside the long sides of the lip 254. These are adapted to capture paint on the surface of the roller as the roller feeds under the leading lip 254, depending on the direction of roll of the roller, and to feed such paint back into the plenum 256.

## Claims

1. A paint system comprising:-
a) a flexible bag for paint, the bag having a sealable opening;
b) a machine, adapted to receive and squeeze the bag of paint;
c) a tube;
d) a connector at one end of the tube for releasable connection to said opening;
e) means to connect a paint applicator at the other end of said tube, adapted to receive paint from said bag, through said connector and tube, when the bag is squeezed by the machine; wherein
f) said connector has connection means comprising a bayonet-type arrangement for engagement with a corresponding arrangement on the opening; and
g) the connector and opening have smooth circular-cylindrical engaging sections adapted to seal one against the other when said bayonet-type arrangement between the connector and bag are engaged.

2. A paint system as claimed in claim 1, wherein
a) said opening has first and second connection means;
b) said first connection means is adapted for engagement by a cap for sealing said bag closed; and
c) said second connection means comprises said bayonet-type arrangement for engagement by the connection means on the connector.

3. A paint system as claimed in claim 2, wherein said first connection means comprises a screw thread.

4. A paint system as claimed in claim 3, wherein said opening comprises a base and a substantially cylindrical annular neck extending from said base, said screw thread being formed on the outside of said neck adjacent said base, and said bayonet arrangement being formed on the outside of said neck beyond that end of said screw thread which is remote from said base, said bayonet arrangement having a reduced radius relative to the screw thread.

5. A paint system as claimed in claim 4, wherein said bayonet arrangement itself comprises a short screw thread and detent means are provided to lock the connector to the opening when said bayonet arrangements on the neck and connector are engaged.

6. A paint system as claimed in claim 5, wherein said detent means comprises a notch in one of the base and the connector, and a corresponding lug on the other of the neck and connector.

7. A paint system as claimed in claim 5, wherein said detent means comprises a ramp on the radius of the bayonet screw thread, towards the end of the screw thread, and over which bayonet dogs on the connector must ride to reach a final position..

8. A paint system as claimed in any preceding claim, wherein the length of mutually engaging circular cylindrical sections of the opening and connector is at least as long as the diameter of said mutually engaging sections.

9. A paint system as claimed in any preceding claim, wherein one of said circular cylindrical sections is provided at least in part by an elastomeric O-ring.

10. A paint system as claimed in claim 9, wherein the section of the opening is an internal surface of the neck, and the section of the connector is an external surface thereof.

11. A paint system as claimed in claim 10, wherein the O-ring is disposed in a groove around the connector.

12. A paint system as claimed in claim 11, wherein the O-ring is disposed adjacent the open end of the connector.

13. A paint system as claimed in any preceding claim, further comprising means providing a visual indication that correct engagement between said connector and bag is achieved.

14. A paint system as claimed in claim 13, wherein said visual indication comprises a non-circular shaped part of the connector adapted to lie adjacent to a correspondingly shaped part of the bag when said correct engagement is achieved.

15. A paint system as claimed in claim 14, wherein the non-circular shaped part may be formed from a collar depending from said connector and surrounding the base of the opening when said correct engagement is achieved.

16. A paint system as claimed in any preceding claim, wherein said bag comprises a plastics envelope and said opening comprises a discrete opening element welded between parts of the envelope.

17. A paint system as claimed in claim 16, wherein the opening element has a weld part on which the base is formed, the weld part being elongate across the opening in order to lead-in and lead-out mating parts of the envelope.

18. A paint system as claimed in claim 17, when dependent on claim 13, wherein the collar corresponds in shape to the weld part and thereby provides said visual indication.

19. A paint system comprising:-
a) a flexible bag for paint, the bag having a sealable opening;
b) a machine adapted to receive and squeeze the bag of paint;
c) a tube;
d) a connector at one end of the tube for releasable connection to said opening;
e) means to connect a paint applicator at the other end of said tube, adapted to receive paint from said bag, through said connector and tube, when the bag is squeezed by the machine;
f) the machine comprising an open container to receive the bag of paint and having a top edge;
g) a lid, to close the container around said edge; and
h) a recess in the edge adapted to receive captively the connector; wherein
i) the connector comprises a support region adapted to be received in said recess, a connection region for connection to said bag, and a flexible region between said connection and support regions, which flexible region permits adjustment of the position of the connection region relative to the support region during emptying of the bag in use of the system.

20. A paint system as claimed in claim 19, wherein the tube is itself flexible and passes through the support region of the connector to the connection region thereof, the connector protecting the tube against compression when the bag is squeezed by the machine.

21. A paint system as claimed in claim 20, wherein the connector has a protection region beyond the support region with respect to the connection region to support flexibly the tube exiting the support region.

22. A paint system as claimed in any of claims 19 to 21, wherein the regions of the connector are a single integrated moulded plastics component, the flexible region comprising a helix joining said support and connection regions.

23. A paint system as claimed in claim 22, wherein the connector comprises a connection element which is discrete with respect to said regions of the connector, and is captivated in said connection region.

24. A paint system as claimed in claim 23, wherein said connection element has one end connected to the tube and its other end forming a circular-cylindrical section of the connector for sealing engagement with a corresponding section of the opening of the bag.

25. A paint system as claimed in claim 24, wherein said one end of the connection element has a sleeve over which said tube is slid for attachment thereof, the connection region having a surface surrounding said sleeve when the connection element is in place inside the connection region to captivate the tube therebetween.

26. A paint system as claimed in claim 25, wherein a circumferential rib is disposed on the sleeve, against which sleeve the tube is pressed by said surrounding surface of the connection region to secure the tube in place in the connector.

27. A paint system as claimed in any of claims 19 to 26, wherein said support region and recess are shaped so that said support region only fits said recess to permit closure of the lid in no more than two orientations of the support region in the recess.

28. A paint system as claimed in claim 27, wherein said support region has a depending pillar and said recess has an eye into which said pillar closely fits, and wherein the connector prevents closure of the lid if the support region is in the recess without the pillar being received in the eye.

29. A paint system as claimed in claim 27 or 28, wherein there is at least some rotational rigidity between the support and connection region of the connector and said orientation corresponds with the orientation between the connector and bag when the connector is correctly connected to the bag.

30. A paint system as claimed in claims 1 and 29, wherein said rotational rigidity also serves to prevent inadvertent unscrewing of the bayonet connection between the connector and bag.

31. A paint system as claimed in claims 30 and 22, or claims 30 and any one of claims 23 to 27 when dependent on claim 22, wherein the helix lies close against the tube and the direction of twist of the helix is such that undoing of the bayonet connection between the connector and bag is in the tightening direction of the helix.

32. A paint system comprising:-
a) a flexible bag for paint, the bag having a sealable opening;
b) a machine adapted to receive and squeeze the bag of paint;
c) a tube;
d) a connector at one end of the tube for releasable connection to said opening, the connector having a generally longitudinal axis;
e) means to connect a paint applicator at the other end of said tube, adapted to receive paint from said bag, through said connector and tube, when the bag is squeezed by the machine;
f) the machine comprising an open container to receive the bag of paint and having a top edge;
g) a lid to close the container around said edge; wherein
h) the edge is provided with a recess adapted to receive the connector;
i) the connection between said connector and opening has no more than two specific rotational positions of the connector about its longitudinal axis with respect to the opening; and
j) the connector is receivable in the recess with the lid closed over the recess in not more than two orientations of the connector about said longitudinal axis with respect to the recess.

33. A paint system as claimed in any preceding claim, wherein the machine comprises: -
a) an open container to receive the bag of paint;
b) a lid to close the container
c) a latch to secure the lid closed when the latch is active;
d) a bellows in the container
e) a pump adapted to pressurise the bellows with fluid so as to squeeze the bag;
f) a connectible power supply to power the pump;
g) a user operable switch to connect power to the pump; wherein
h) lid means prevent the latch remaining active unless the lid is closed; and
i) latch means prevent connection of power to the pump unless the latch is active.

34. A paint system as claimed in claim 33, wherein the latch is part of a handle pivoted to the container and pivotable between open and closed positions thereof, the latch being active in the closed position of the handle.

35. A paint system as claimed in claim 34, wherein said lid is pivoted to the container and said lid means holds the handle in its closed position when the lid is in its closed position.

36. A paint system as claimed in claim 35, wherein said lid means comprises a catch on the lid which is caught by the handle on closing of the handle when the lid is already closed. .

37. A paint system as claimed in claim 35 or 36, wherein said latch comprises at least one substantially C-shaped clasp on the handle, ends of the clasp being adapted to engage ledges on the lid and container when the handle is closed.

38. A paint system as claimed in any of claims 33 to 37, wherein the switch comprises a switch body and a switch actuator, the body being movable relative to the container between first and second positions, in the first position of which, said switch actuator is actuatable by the user and in the second position of which said switch actuator is not actuatable by the user, the latch means being operable to move the body and maintain it in said first position when the latch is active.

39. A paint system as claimed in claim 38, wherein the switch further comprises a user operable button adapted either to actuate the switch actuator when said arm is in said first position and when said latch is active, or serving to move the arm to said second position when the latch is not active.

40. A paint system as claimed in claims 34 and 39, wherein the latch means comprises part of the handle which, when the handle is closed moves the switch body to its first position.

41. A paint bag, which bag is flexible and comprises:-
a) a sealable opening; wherein
b) said opening has a neck provided with first and second connection means; wherein
c) said first connection means is adapted for engagement by a cap for sealing said bag closed; and
d) said second connection means comprises a bayonet-type arrangement for engagement by a corresponding arrangement on a connector adapted for connection to the paint bag for delivery of paint therefrom;
e) the opening having a smooth circular-cylindrical section adapted to seal a corresponding section of the connector when said bayonet-type arrangement between the connector and bag are engaged.

42. A paint bag as claimed in claim 41, wherein said first connection means comprises a screw thread.

43. A paint bag as claimed in claim 41 or 42, wherein said bag comprises a plastics envelope and said opening comprises a discrete opening element welded between parts of the envelope.

44. A paint bag as claimed in claim 43, wherein the opening element has a weld part on which the base is formed, the weld part being elongate across the opening in order to lead-in and lead-out mating parts of the envelope.

45. A paint bag as claimed in claim 44, wherein the collar corresponds in shape to the weld part and thereby provides said visual indication.

46. A paint applicator for connection to a paint system as claimed in any of claims 1 to 4.

47. A paint system, a paint bag, or a paint applicator, substantially as each is hereinbefore described with reference to relevant Figures of the accompanying drawings.
